# EUROPEAN PATENT SPECIFICATION

(11) **EP 0 411 075 B1**
(45) Date of publication and mention of the grant of the patent: **17.01.1996**
(21) Application number: 90901872.3
(22) Date of filing: 17.01.1990
(51) Int. Cl.: G03B 21/64

(54) **PHOTOGRAPHIC ACCESSORY DEVICE TO DISTRIBUTE SLIDES ONTO A TRANSPARENT SCREEN WITHOUT NEED TO MANIPULATE INDIVIDUAL SLIDES**
FOTOGRAFISCHES ZUBEHÖR ZUM VERTEILEN VON DIAS AUF EINEN LICHTDURCHLÄSSIGEN SCHIRM OHNE HANDHABUNG EINZELNER DIAS
ACCESSOIRE PHOTOGRAPHIQUE DE DISTRIBUTION DE DIAPOSITIVES SUR UN ECRAN TRANSPARENT SANS MANIPULATION INDIVIDUELLE DE DIAPOSITIVES

(30) Priority: 27.01.1989 IT 1922389
(43) Date of publication of application: 06.02.1991
(73) Proprietor: Dentella, Alessandro, I-20052 Monza (Mi) (IT)
(72) Inventor: Dentella, Alessandro, I-20052 Monza (Mi) (IT)
(74) Representative: Gervasi, Gemma, Dr.
(86) International application number: PCT/IT90/00006
(87) International publication number: WO 90/08976

(56) References cited:
- WO-A-89/11399
- DE-C- 2 756 558
- US-A- 3 217 436
- US-A- 3 419 984
- US-A- 4 226 038

## Description

The present invention concerns a device for photography meant to facilitate distributing of slides onto a light transparent screen, and their successive restacking in orderly sequence. Whoever owns many photo slides has often an interest to rapidly rewiew one or more decks of slides, for example to select and pick some specific slides; such rewiew is possible after spreading the slides of a deck onto a light transparent screen, against which to rewiew them directly . Ideally, distributing onto the screen and subsequent picking back up the slides should respect the original sequence, and not be too laborious: also of interest is to keep the screen area needed to a minimum, still satisfying what mentioned above.

Transparent or luminous screens are commercially available in various sizes, with surfaces fit to receive slides, for example in bins or in rows; we know of no systems so far available, that free the user from manipulating slides to spread them onto the screen, and to repack them afterwards; to be noted that slides being rather thin makes them not so easy to pick up from the screen, and that manipulations risk to leave fingerprints onto the slides.

US-A-3 419 984 discloses a photo-slide handling and viewing device comprising a light transparent screen having a saw-tooth profile and two flat strips positioned laterally to said saw-tooth shaped screen.

A slidable bridge member is moving on said flat strips for releasing and collecting slide holding frames (holding a plurality of slides) to and from each step of said saw-tooth shaped screen.

The use of said system is somewhat rigid, in that it cannot handle individual slides as usually needed.

US-A-4 226 038 discloses a photo-slide handling and viewing device comprising a dispenser box and a light transparent screen having a slide receiving structure which includes a plurality of pairs of parallel rails along one of which, at regular intervals, a series of pick-off teeth is disposed to engage the slides stored into the dispenser box.

Before collecting the slides, the screen must be tilted in order to free the slides from restraint of the pick-off teeth.

In our disclosure the dispenser box moves along astride each pair of parallel rails for releasing and collecting the slides one by one.

Aim of the present invention is to facilitate and speed up the above mentioned operations, freeing the user from individually manipulating the slides; a further plus is the high density of slides that can be obtained on the screen, regularly and automatically.

These purposes are reached by the device object of the present invention, which comprises a light transparent screen having a slide receiving structure and a dispenser box, housing a stack of slides and moving over the screen parallel to the slide receiving structure: at the bottom of the dispenser box (between its bottom and front walls) a slit is provided through which the housed slides can be released or distributed over the screen.

The slide receiving structure comprises parallel strips of a saw-tooth structure having a steep edge followed by a rising ramp and by a falling ramp and having a pitch shorter than the slide side so that the slides, when distributed on the receiving structure, slightly overlap each other; the strips of the receiving structure have a distance substantially corresponding to the width of the bottom wall of the dispenser box and are separated by flat screen strips lower than the lowest depth of the adjacent saw-tooth structure.

The steep edges of the saw-tooth structure stop the slides which are released when the dispenser box is moving over the screen in a first direction and which rest on the rising ramps of the saw-tooth structure, while the bottom wall of the dispenser box collects the slides distributed onto the screen when the dispenser box is moving over the screen in a second direction, opposite to the first one. Further characterstics of the invention shall become clearer from the description of a preferred but not exclusive version of said system, illustrated by the enclosed pictures by way of illustrating, not of limiting the subject.

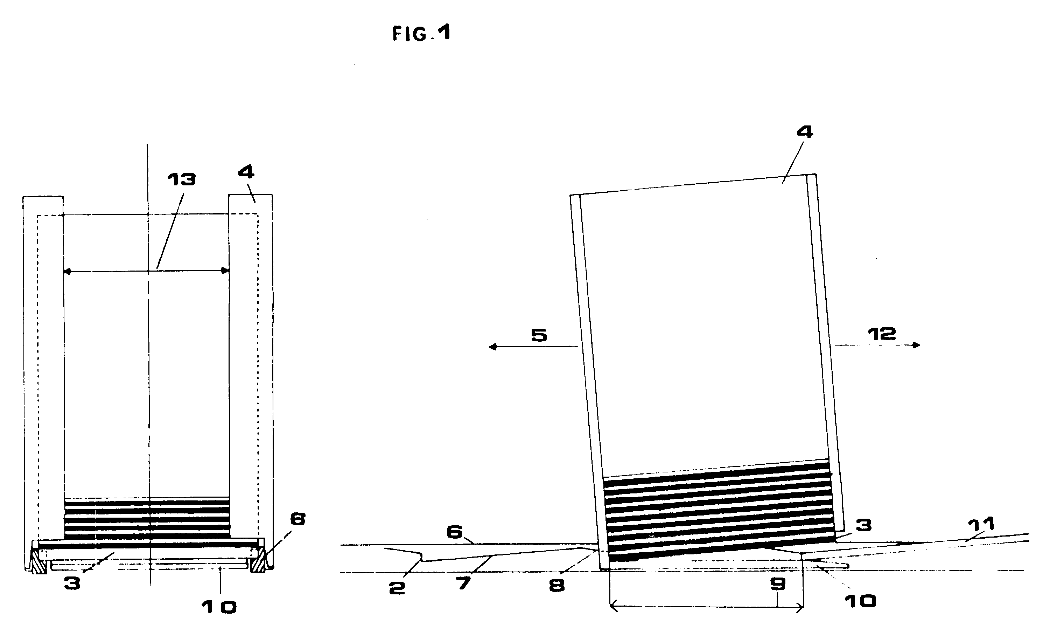

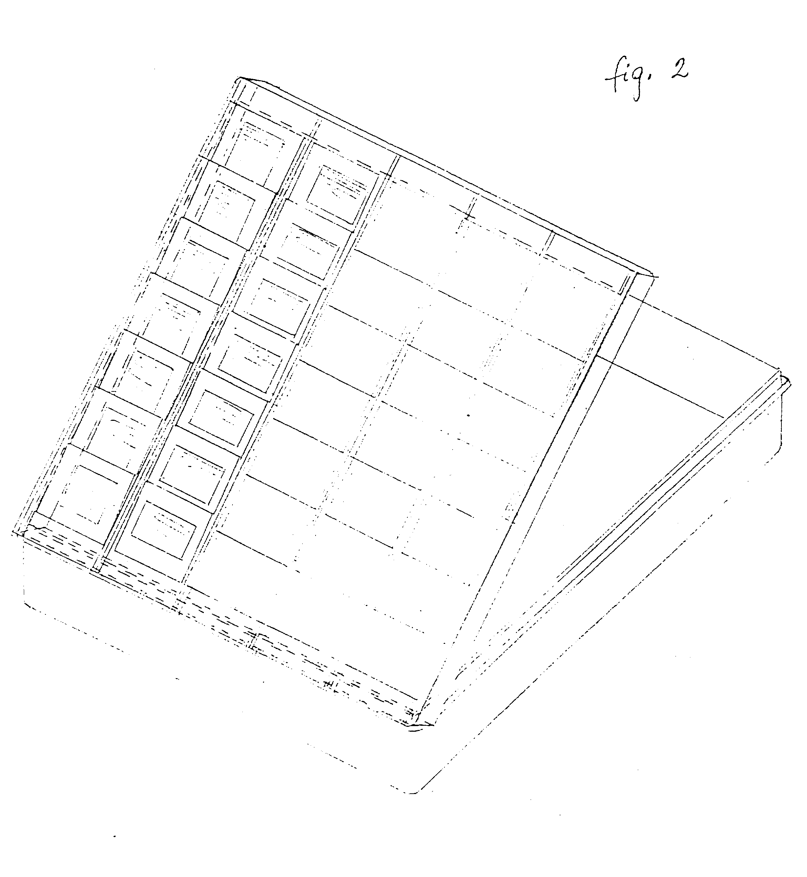

Fig.1 shows in two orthogonal views the mutual working position of the shaped screen and the dispenser box; except for the orientation of the parts, which must be thought of rotated with the screen inclined as per fig.2, the main design features as shown in fig.1, that is: the saw-tooth profile, with tooth height 2 low enough to catch and extract only one slide 3 from the dispenser box 4, when this is made to slide in the extraction direction 5 on the sliderulers 6, while the sides of same rulers act as lateral containment of the slides, which rests on flat sides 7; the slide above it escapes from the catch thanks to the bevel 8.

Distance 9 between two successive teeth is such as to overlay slides, similar to roof tiles, by all the blank (frame) length. The bottom 10 of the dispenser box is parallel and flush to the bottom of the screen stripe, so as to penetrate under slide 11 for capturing it and stacking it up, when the box is made to slide in direction 12.

The front of the dispenser has a slit 13 to facilitate loading and unloading the stack of slides.

Fig.2 shows the same screen obtained by properly shaping the lid of a box designed to hold many stacks of slides in a very compact way.

To be noted that in working condition the screen is kept inclined for various reesons, among which: to facilitate distribution as well as pick up of slides; to enable back lighting from a table top lamp, with light reflecting on a metallized sheet resting on the box bottom part, and finally for easier viewing by a sitting user.

The functioning of the above described system is as follows: to load one must enter the stack of slides in the dispenser box, and prepare the screen at the proper incline, one then makes the dispenser slide downwards for each stripe wanted. To restack, slide the box in the opposite direction and sequence (from the last loaded stripe backwards).

## Claims

1. Photo-slide handling and viewing device for distributing photographic slides (3, 11) for viewing onto a light transparent screen, comprising
- a light transparent screen having a slide receiving structure onto which the slides (3, 11) are distributed for viewing; and
- a dispenser box (4) of substantially rectangular shape having side walls and a bottom wall (10) adapted for housing a stack of slides (3) oriented in parallel to the bottom wall (10) at the bottom of said dispenser box (4), between its front and, the bottom wall (10) a slit being provided through which the slides (3) can be released and distributed over the screen one by one by a sliding movement of the dispenser box (4) over the screen in a first (5) direction parallel to the slide receiving structure of the screen,
characterised in that the slide receiving structure of the screen comprises parallel strips of a saw-tooth structure (2, 7, 8) having a steep edge (2) followed by a rising ramp (7) and a falling ramp (8), the strips having a distance substantially corresponding to the width of the bottom wall (10) of the dispenser box (4) and being separated by flat screen strips lower than the lowest depth of the adjacent saw-tooth structure (2), wherein the steep edge (2) of the saw-tooth structure acts as stop for the slides (3, 11) resting on the rising ramp (7) of the saw-tooth structure, which structure has a pitch (9) shorter than the side of the slides (3, 11) so that the slides (3, 11), when distributed on this slide receiving structure slightly overlap each other; and in that the bottom wall (10) of the dispenser box (4) is arranged so as to collect the slides distributed onto the screen by a movement in a second direction (12) opposite to the first direction (5).

2. Device according to claim 1 wherein the spacing between the lowest depth of the steep edge (2) and the bevel formed by the rising (7) and falling (8) ramps are adapted for using slides with thin as well as with thick slide frames.

3. Device according to claim 1 wherein confinement rulers (6) are arranged parallel to the saw-tooth structures.

4. Device according to claim 1 wherein a light source is provided below the transparent screen.

5. Device according to claim 1 wherein the screen is formed as lid of a box for storing slides.

6. Device according to any of claims 1 to 5 wherein the screen is a flat screen onto which a set of distinct saw-tooth profiled elements, optionally linked to form a frame, is arranged.

7. Device according to claim 1 wherein the dispenser box (4) comprises a means for confining the outlet of frames to prevent the release of more than one slide at a time.

## Patentansprüche

1. Vorrichtung zum Verteilen und Anschauen von Dias(3, 11) auf einen lichtdurchlässigen Schirm, bestehend aus:
- einem lichtdurchlässigen Schirm, der ein Diapositivgehäuse enthält, auf den die Dias (3, 11) verteilt werden; und
- einem rechteckigen Verteiler (4), mit Seitenwanden und Boden (10), der einen Stapel von Dias (3) aufnehmen kann, die parallel zum Boden (10) orientiert sind, wobei am Boden dieses Verteilers (4), zwischen seiner Vorderseite und dem Boden (10), einen Schlitz vorgesehen ist, durch den die einzelnen Dias (3) über den Schirm von einer Gleitbewegung des Verteilers (4) freigelassen und verteilt werden können; diese Bewegung folgt eine erste Richtung (5) parallel zu dem Diapositivgehäuse des Schirmes,
dadurch gekennzeichnet, daß das Diapositivgehäuse des Schirmes parallele gezahnte Streifen (2, 7, 8) enthält, die einen stürzenden Rand (2), eine steigende Rampe (7) und eine absteigende Rampe (8) haben; der Abstand der Streifen entspricht der Breite des Bodens (10) des Verteilers (4) und die obengenannten Streifen sind von flachen Schirmstreifen geteilt, die niedriger sind als die niedrigste Tiefe der nahen gezahnten Streifen (2), wobei der stürzende Rand (2) der gezahnten Streifen als Halter der Dias (3, 11) dient, die auf der stiegenden Rampe (7) der gezahnten Streifen liegen, welche Streifen eine Spitze (9) haben, die kürzer als die Seite der Dias (3, 11) ist, so daß die Dias (3, 11) ein wenig einander überlagern, wenn sie auf den Diapositivgehäuse verteilt werden; und dadurch gekennzeichnet, daß der Boden (10) des Verteilers (4) die auf dem Schirm verteilten Dias durch eine Bewegung aufnimmt, die eine zweite Richtung (12) entgegengesetzt die erste Richtung (5) folgt.

2. Vorrichtung nach Anspruch 1, dadurch gekennzeichnet, daß der Abstand zwischen der niedrigsten Tiefe des stürzenden Randes (2) und der Schrägkante bestehend aus der steigenden (7) und der absteigenden (8) Rampe benutzt wird, um Dias mit dicken oder dünnen Rahmen anzuschauen.

3. Vorrichtung nach Anspruch 1, dadurch gekennzeichnet, daß Begrenzungslineale (6) parallel zu den gezahnten Streifen vorgesehen sind.

4. Vorrichtung nach Anspruch 1, dadurch gekennzeichnet, daß eine Lichtquelle unter dem lichtdurchlässigen Schirm vorgesehen ist.

5. Vorrichtung nach Anspruch 1, dadurch gekennzeichnet, daß der Schirm als Deckel einer Schachtel für Dias gestaltet ist.

6. Vorrichtung nach Ansprüchen 1-5, dadurch gekennzeichnet, daß der Schirm ein flacher Schirm ist, auf dem einige gezahnte Streifen vorgesehen sind, die auch verbunden sein können, um einen Rahmen zu bilden.

7. Vorrichtung nach Anspruch 1, dadurch gekennzeichnet, daß der Verteiler (4) ein Begrenzungsmittel enthält, das der Ausgang von Rahmen verhindert, um die Freilassung von mehr als ein Dia auf einmal zu vermeiden.

## Revendications

1. Dispositif pour la distribution et la vision de diapositives (3, 11) sur un écran transparent, comprenant
- un écran transparent ayant un logement pour diapositives sur lequel les diapositives (3, 11) sont distribuées pour être régardées; et
- un distributeur rectangulaire (4) ayant des côtés et un fond (10) fait pour loger une pile de diapositives (3) orientées parallèlement au fond (10), au fond du susdit distributeur (4), entre son devant et ledit fond (10), étant prévue une fente à travers laquelle les diapositives (3) peuvent passer et être distribuées sur l'écran, une par une, grâce à un mouvement du distributeur (4) sur l'écran dans une première direction (5) parallèle au logement pour diapositives de l'écran,
caracterisé en ce que le logement pour diapositives de l'écran comprend des bandes dentées parallèles (2, 7, 8) ayant un bord accidenté (2) suivi par une rampe ascendante (7) et une rampe descendante (8), les bandes ayant une distance qui correspond à la largeur du fond (10) du distributeur (4) et étant separées par des bandes d'écran plattes qui sont plus bas que la plus basse profondeur des bandes dentées voisines (2); le bord accidenté (2) des bandes dentées agissant comme un arrêt pour les diapositives (3, 11) qui se trouvent sur la rampe ascendante (7) des bandes dentées, lesquelles bandes ont un pic (9) qui est plus court des côtés des diapositives (3, 11), de sorte que les diapositives (3, 11) se superposent un peu quand elles sont distribuées sur le logement pour diapositives; et en ce que le fond (10) du distributeur (4) est fait d'une façon qu'il recueille les diapositives distribuées sur l'écran grâce à un mouvement dans une seconde direction (12) opposée à la première direction (5).

2. Dispositif selon la revendication 1, caracterisé en ce que l'espace entre la plus basse profondeur du bord accidenté (2) et le arrondissage formé par la rampe ascendante (7) et descendante (8) est fait pour utiliser des diapositives avec des cadres soit épais que minces.

3. Dispositif selon la revendication 1, caracterisé en ce que parallèlement aux bandes dentées il y a des règles de délimitation (6).

4. Dispositif selon la revendication 1, caracterisé en ce que sous l'écran transparent est prevue une source de lumière.

5. Dispositif selon la revendication 1, caracterisé en ce que l'écran est formé comme le couvercle d'une boîte pour les diapositives.

6. Dispositif selon les revendications 1-5, caracterisé en ce que l'écran est un écran plat sur lequel sont prevus plusieurs éléments dentés qui peuvent être liés pour former un cadre.

7. Dispositif selon la revendication 1, caracterisé en ce que le distributeur (4) comprend des moyens pour limiter la sortie des cadres, en empêchant la libération de plus d'une diapositive à la fois.
